# EUROPÄISCHE PATENTANMELDUNG

(11) **EP 1 842 882 A1**
(43) Veröffentlichungstag der Anmeldung: **10.10.2007**
(21) Anmeldenummer: 06007355.8
(22) Anmeldetag: 07.04.2006
(51) Int. Cl.: C09D 5/16, B05D 7/00

(54) **Verfahren zur Beschichtung von Oberflächen und Beschichtungssystem zur Beschichtung von Oberflächen**

(71) Anmelder: Ceram AG, 6304 Zug (CH)
(72) Erfinder: Sanner, Lutz P., 40474 Düsseldorf (DE)
(74) Vertreter: Stenger, Watzke & Ring

(57) **Zusammenfassung**

Die Erfindung betrifft ein Verfahren zur Beschichtung von Oberflächen, insbesondere von Gebäudewänden. Um ein Verfahren zu schaffen, welches auf einfache Weise durchführbar ist und eine Beschichtung mit neuartigen Eigenschaften liefert, wird mit der Erfindung ein Verfahren vorgeschlagen, bei dem auf die zu beschichtende Oberfläche 8 in einem ersten Verfahrensschritt zur Ausbildung einer ersten Schicht (3) ein erstes Beschichtungsmaterial und in einem zweiten Verfahrensschritt zur Ausbildung einer zweiten Schicht (4) über der ersten Schicht (3) ein zweites Beschichtungsmaterial aufgebracht wird, wobei als zweites Beschichtungsmaterial ein fluidförmiges Trägermaterial mit darin dispergierten Nanopartikeln (5) verwendet wird.

## Beschreibung

Die Erfindung betrifft ein Verfahren zur Beschichtung von Oberflächen, insbesondere ein Verfahren zur Beschichtung von Gebäudewänden, Dächern und/oder Teilen hiervon. Des weiteren betrifft die Erfindung ein Beschichtungssystem.

Verfahren zur Beschichtung von Oberflächen im allgemeinen sowie Verfahren zur Beschichtung von vorzugsweise Gebäudewänden, Gebäudedächern oder Teilen hiervon im speziellen sind aus dem Stand der Technik an sich bekannt, weshalb es eines gesonderten druckschriftlichen Nachweises an dieser Stelle nicht bedarf.

Aus dem Stand der Technik sind insbesondere solche Verfahren zur Beschichtung von Oberflächen, insbesondere von Gebäudewänden, Gebäudedächern oder dergleichen bekannt geworden, bei denen auf die zu beschichtende Oberfläche in einem ersten Verfahrensschritt zur Ausbildung einer ersten Schicht ein erstes Beschichtungsmaterial und in einem zweiten Verfahrensschritt zur Ausbildung einer zweiten Schicht über der ersten Schicht ein zweites Beschichtungsmaterial aufgebracht wird. Die endfertig ausgebildete Beschichtung ist zweischichtig ausgebildet, wobei die erste Schicht auch als Unterschicht und die zweite Schicht auch als Oberschicht bezeichnet werden kann. Die Oberschicht dient insbesondere der Versiegelung der Unterschicht und kann insofern auch als Versiegelungsschicht bezeichnet werden.

Zum Schutz und zur farbigen Ausgestaltung sowohl von Innen- als auch von Außenwänden von Gebäuden kommen in aller Regel Farbsysteme zum Einsatz, wobei als schutz- und/oder farbgebende Beschichtung ein Anstrichmittel auf die zu beschichtende Oberfläche aufgetragen wird, beispielsweise durch Streichen oder Sprühen. Die so ausgebildete Schicht kann zum Schutz derselben versiegelt werden, zu welchem Zweck auf diese erste Schicht eine zweite Schicht aufgetragen wird, was ebenfalls durch Streichen oder Aufsprühen geschehen kann. Als die die erste Schicht versiegelnde zweite Schicht kommt insbesondere eine Lackschicht in Frage.

Obgleich sich die aus dem Stand der Technik bekannten Verfahren zur Beschichtung von Oberflächen, insbesondere von Gebäudewänden im alltäglichen Praxiseinsatz bewährt haben, besteht Verbesserungsbedarf, insbesondere mit Blick auf die Eigenschaften der auf die Oberfläche aufgebrachten Beschichtung.

Es ist daher die Aufgabe der Erfindung, ein neuartiges Verfahren zur Beschichtung von Oberflächen, insbesondere von Gebäudewänden anzugeben, welches auf einfache Weise durchführbar ist und eine Beschichtung mit neuartigen Eigenschaften liefert. Ferner soll ein neuartiges Beschichtungssystem vorgeschlagen werden.

Verfahrensseitig wird zur Lösung der vorstehenden Aufgabe vorgeschlagen, daß als zweites Beschichtungsmaterial ein fluidförmiges Trägermaterial mit darin dispergierten Nanopartikeln verwendet wird.

Mit dem erfindungsgemäßen Verfahren wird auf der zu beschichtenden Oberfläche eine Gesamtbeschichtung ausgebildet, die aus zwei einzelnen Schichten besteht. Dabei wird die erste Schicht in einem ersten Verfahrensschritt auf die zu beschichtende Oberfläche aufgebracht. In einem zweiten Verfahrensschritt wird sodann auf die bereits auf die Oberfläche aufgetragene erste Schicht zum Schutz derselben eine zweite Beschichtungsschicht aufgetragen. Die erste Schicht kann mithin als Unterschicht und die zweite Schicht als Oberschicht bzw. als Versiegelungsschicht bezeichnet werden.

Zur Ausbildung der Versiegelungsschicht kommt erfindungsgemäß ein Beschichtungsmaterial zum Einsatz, welches Nanopartikel enthält, die in einem Trägermaterial, beispielsweise eine auf Acrylharz gebildeten Lösung dispergiert sind.

Die Ober- bzw. Versiegelungsschicht schützt die darunter liegende Unterschicht. Durch Auftragen der Oberschicht auf die Unterschicht wird die Unterschicht aufgrund der in der Oberschicht befindlichen Nanopartikel nanoformiert. Der besondere Nutzen dieser Nanoformierung besteht darin, daß an der endfertig beschichteten Oberfläche Wasser, wie zum Beispiel Regen und/oder Kondenswasser abperlt und daß Luftimmissionen mineralischer und/oder biologischer Art, wie zum Beispiel Schmutze, Algen und/oder Keime an dieser nicht anhaften können. Die in der Oberschicht befindlichen Nanopartikel bewirken zudem, daß sich die beschichtete Oberfläche weitestgehend von selbst reinigt (der sogenannte Lotuseffekt). Auf die fertigbeschichtete Oberfläche auftreffende Schmutzpartikel liegen nur lose auf dieser auf und werden durch die Einwirkung von Luftströmungen oder Wasser automatisch abgespült.

Ein weiterer Vorteil der Ober- bzw. Versiegelungsschicht besteht darin, daß diese dampfdiffusionsoffen und lichtdurchlässig ist. Die unterhalb der Oberschicht liegende Unterschicht kann deshalb auch nach einem Auftrag der Oberschicht ab- bzw. austrocknen, ohne daß es erneut zu Verfeuchtungen zum Beispiel durch Regen kommen kann.

Zur Ausbildung der Ober- bzw. Versiegelungsschicht dient ein Beschichtungsmaterial, welches aus einem fluidförmigen Trägermaterial besteht, in welchem Nanopartikel dispergiert sind. Als Nanopartikel werden vorzugsweise nanoskalige Oxyde der Elemente der Gruppe bestehend aus Aluminium, Titan, Zirkonium, Tantal und Zinn verwendet. In einer alternativen Ausgestaltungsform können als Nanopartikel auch auf Siliziumbasis hergestellte Nanostrukturen verwendet werden.

Mit dem erfindungsgemäßen Verfahren werden durch den Auftrag der Oberschicht auf die Unterschicht auf die Oberfläche der Unterschicht Nanostrukturen vorzugsweise in Form sich selbst organisierender, molekularer Monolagen beispielsweise auf Siliziumbasis aufgebracht. Diese Nanostrukturen sind in einem geeigneten, fluidförmigen Trägermaterial dispergiert und können somit aufgesprüht oder aufgestrichen werden. Die auf diese Weise auf die Oberfläche der Unterschicht aufgetragenen Nanostrukturen ordnen sich selbst, zum Beispiel auf oxidiertem Silizium zu perfekt parallel zur Oberfläche der Unterschicht ausgerichteten und sehr festen Nano-Strukturen. Auf diese Weise entsteht eine Oberschicht, die härter und fester als zum Beispiel ein aufgesprühter Lack ist, die aber dennoch dampfdiffusionsoffen ist, um ein Ab- bzw. Austrocknen der Unterschicht zu ermöglichen.

Das zur Ausbildung der Oberschicht verwendete Beschichtungsmaterial enthält in dispergierter Form Nanopartikel, die vorzugsweise einen mittleren Durchmesser von unter 200 Nanometer, vorzugsweise von unter 100 Nanometer, mehr bevorzugt von unter 50 Nanometer, noch mehr bevorzugt von unter 5 Nanometer aufweisen. In vorteilhafter Weise ist es mithin möglich, die Ober- bzw. Versiegelungsschicht als nanoskopisch dünne Schicht auszubilden, wobei im Sinne der Erfindung unter "nanoskopisch dünn" eine Schichtdicke von unter 200 Nanometer, vorzugsweise von 100 Nanometer, mehr bevorzugt von unter 50 Nanometer, noch mehr bevorzugt von unter 5 Nanometer zu verstehen ist.

Die mittels der Oberschicht auf die Unterschicht aufgetragenen Nanostrukturen sind in Abhängigkeit von der Beschaffenheit der Oberfläche der Unterschicht und den physikalischen Einwirkungen auf die endfertig beschichtete Oberfläche durch Witterung und andere Emissionen unterschiedlich lang haltbar. Versuche haben allerdings gezeigt, daß in jedem Fall die Haltbarkeit der mittels der Oberschicht versiegelten Unterschicht deutlich gesteigert werden kann.

Bevorzugterweise wird als erstes Beschichtungsmaterial zur Ausbildung der Unterschicht ein fluidförmiges Trägermaterial mit darin dispergierten Körperelementen, deren Oberflächen mit Nanopartikel besetzt sind, verwendet. Ein derartiges Beschichtungsmaterial ist in der EP 1 591 509 A1 beschrieben, auf deren Inhalt vollumfänglich und explizit auch mit Blick auf das erfindungsgemäße Verfahren verwiesen wird.

Bei einem Beschichtungsmaterial zur Ausbildung der Unterschicht, welches einen hohen Anteil an keramischen Bestandteilen aufweist, wie dies zum Beispiel bei dem Beschichtungsmaterial nach der vorgenannten EP 1 951 509 A1 der Fall ist, kann durch einen Auftrag der die Nanostrukturen enthaltenen Oberschicht auf die Unterschicht eine Gesamtbeschichtung erreicht werden, deren Haltbarkeit in etwa doppelt so lang ist wie bei herkömmlichen Anstrichen, zum Beispiel auf Basis von Acrylharz-Dispersionen. Eine zweite Nanoformierung durch eine Nachbearbeitung der keramischen Unterschicht kann eine nochmalige Verdoppelung der Haltbarkeit ergeben, so daß eine Standzeit der Gesamtbeschichtung von mehreren Jahren möglich ist. Dabei weist die nach dem erfindungsgemäßen Verfahren ausgebildete Beschichtung den weiteren Vorteil auf, daß die Haltbarkeit bzw. Standzeit der Nanoformierung von Wandoberflächen zum Schutz vor Feuchte und Schmutz nicht plötzlich nachläßt. Die Standzeit der Nanoformierung reduziert sich vielmehr in einem sehr langsam einsetzenden Vorgang, der nach einer Einbuße von etwa 45 % seiner Wirkung erneuert werden kann, um einen ausreichenden Schutz erneut auszubilden.

Zur weiteren Lösung der vorstehenden Aufgabe wird ferner ein Beschichtungssystem zur Beschichtung von Oberflächen, insbesondere von Gebäudewänden oder dergleichen, mit einem ersten Beschichtungsmaterial zur Ausbildung einer ersten Schicht und einem zweiten Beschichtungsmaterial zur Ausbildung einer zweiten Schicht über der ersten Schicht, wobei das zweite Beschichtungsmaterial ein fluidförmiges Trägermaterial mit darin dispergierten Nanopartikel ist, vorgeschlagen. Die Vorteile dieses Beschichtungssystems ergeben sich analog zu den zum erfindungsgemäßen Verfahren bereits erläuterten Vorteilen.

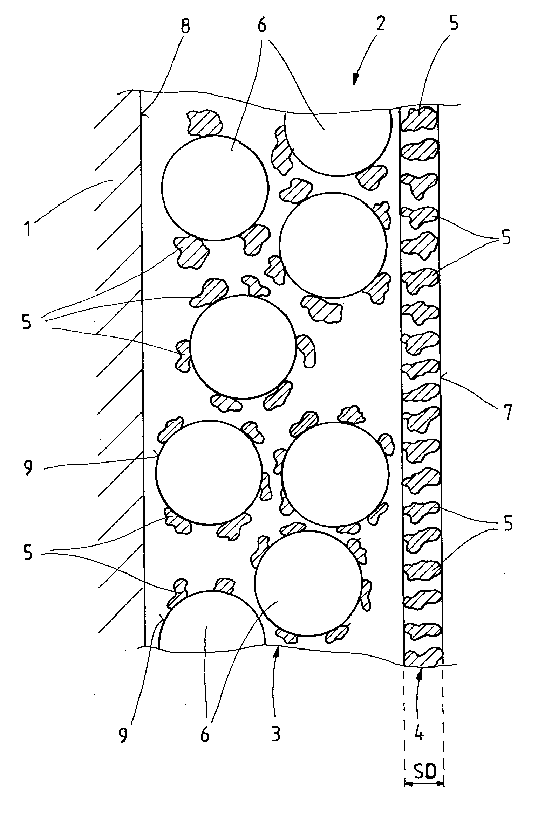

Weitere Merkmale und Vorteile der Erfindung ergeben sich aus der nachfolgenden Beschreibung anhand der Figur. Dabei zeigt
- Fig. 1: in schematischer Darstellung eine nach dem erfindungsgemäßen Verfahren beschichtete Oberfläche.

Fig. 1 zeigt in einer schematischen Darstellung die äußere Fassade eines Gebäudes in Form einer Gebäudewand 1. Auf die Wandoberfläche 8 der Wand 1 ist eine Beschichtung 2 nach der Erfindung aufgetragen.

Die Beschichtung 2 besteht aus einer ersten Schicht 3 und einer darauf aufgebrachten zweiten Schicht 4. Die erste Schicht 3 kann als Unterschicht und die zweite Schicht 4 als Ober- bzw. Versiegelungsschicht bezeichnet werden.

Das Beschichtungsmaterial zur Ausbildung der ersten Schicht 3 ist aus einem fluidförmigen Trägermaterial gebildet, in dem Körperelemente 6 dispergiert sind. Die Körperelementoberflächen 9 sind mit Nanopartikeln 5 besetzt. Bei den Körperelementen 6 handelt es sich um kristalline und/oder polykristalline Mikrohohlkugeln, keramische Mikrohohlkugeln oder Glasmikrohohlkugeln.

Das Trägermaterial, in dem die Körperelemente 6 dispergiert sind, umgibt die Körperelemente 6 nach Art einer Matrix. Die Matrix ist elastisch und atmungsaktiv. In ihr sind die Körperelemente 6 eingebettet. Aufgrund dessen weist die die erste Schicht 3 bildende Beschichtung einen geringen thermischen Ausdehnungskoeffizienten und eine hohe Temperaturwechselbeständigkeit auf. Durch eine geeignete Auswahl des Trägermaterials und aufgrund der Tatsache, daß es sich bei den Körperelementen 6 bevorzugterweise um keramische Elemente handelt, weist die die erste Schicht bildende Beschichtung darüber hinaus eine sehr hohe Beständigkeit gegenüber Säuren, Salzen und deren Lösungen auf, wodurch sie insbesondere gegenüber Umwelteinflüssen äußerst resistent ist.

Die Oberfläche 9 der Körperelemente 6 ist mit monoskaligen Partikeln, d.h. Nanopartikeln 5 besetzt, deren Größe um einen Faktor zwischen 100 und 10.000 kleiner ist als die der Körperelemente 6.

Die die erste Schicht 3 bildende Beschichtung wird in einem ersten Verfahrensschritt auf die Oberfläche 8 der Wand 1 aufgetragen. In einem zweiten Verfahrensschritt wird auf die erste Schicht 3 zum Schutz derselben eine zweite Schicht 4 aufgebracht, die auch als Ober- bzw. Versiegelungsschicht bezeichnet werden kann.

Die zweite Schicht 4 wird aus einem Beschichtungsmaterial gebildet, welches aus einem Trägermaterial mit darin in dispergierter Form vorliegenden Nanopartikeln 5 besteht. Die zweite Schicht 4 kann beispielsweise mittels Aufsprühen auf die erste Schicht 3 ausgebildet werden. Die erste Schicht 3 und die zweite Schicht 4 bilden zusammen die endfertige Beschichtung 2.

Die in der zweiten Schicht 4 vorhandenen Nanopartikel 5 bilden Nanostrukturen aus, bei denen es sich um selbst organisierende, molekulare Monolagen beispielsweise auf Basis von Silizium handelt. Diese Nanostrukturen (zum Beispiel Trichlorsilanol) ordnen sich selbst (zum Beispiel auf oxydiertem Silizium) zu perfekt parallel ausgerichteten und sehr festen Nano-Strukturen. Die zweite Schicht 4 weist dabei eine nanoskopisch dünne Schicht SD von zum Beispiel 5 Nanometer auf, die härter und fester als zum Beispiel ein aufgesprühter Lack ist, die aber dennoch dampfdiffusionsoffen ist.

### Bezugszeichenliste

- 1: Wand
- 2: Beschichtung
- 3: erste Schicht
- 4: zweite Schicht
- 5: Nanopartikel
- 6: Körperelement
- 7: Oberfläche
- 8: Wandoberfläche
- 9: Körperelementoberfläche

- SD: Schichtdicke

## Patentansprüche

1. Verfahren zur Beschichtung von Oberflächen, insbesondere von Gebäudewänden, bei dem auf die zu beschichtende Oberfläche (8) in einem ersten Verfahrensschritt zur Ausbildung einer ersten Schicht ein erstes Beschichtungsmaterial und in einem zweiten Verfahrensschritt zur Ausbildung einer zweiten Schicht (4) über der ersten Schicht (3) ein zweites Beschichtungsmaterial aufgebracht wird, wobei als zweites Beschichtungsmaterial ein fluidförmiges Trägermaterial mit darin dispergierten Nanopartikeln (5) verwendet wird.

2. Verfahren nach Anspruch 1, **dadurch gekennzeichnet, daß** als erstes Beschichtungsmaterial ein fluidförmiges Trägermaterial mit darin dispergierten Körperelementen (6), deren Oberflächen (9) mit Nanopartikeln (5) besetzt sind, verwendet wird.

3. Verfahren nach Anspruch 1 oder 2, **dadurch gekennzeichnet, daß** als Nanopartikel (5) nanoskalige Oxyde der Elemente der Gruppe bestehend aus Aluminium, Titan, Zirkonium, Tantal und Zinn verwendet werden.

4. Verfahren nach Anspruch 1 oder 2, **dadurch gekennzeichnet, daß** als Nanopartikel (5) auf Siliziumbasis hergestellte Nanostrukturen verwendet werden.

5. Verfahren nach einem der vorhergehenden Ansprüche, **dadurch gekennzeichnet, daß** Nanopartikel (5) mit einem mittleren Durchmesser von unter 200 Nanometer, vorzugsweise von unter 100 Nanometer, mehr bevorzugt unter 50 Nanometer, noch mehr bevorzugt von unter 5 Nanometer verwendet werden.

6. Verfahren nach einem der vorhergehenden Ansprüche, **dadurch gekennzeichnet, daß** die zweite Schicht (4) mit einer Schichtdicke (SD) von unter 200 Nanometer, vorzugsweise von unter 100 Nanometer, mehr bevorzugt von unter 50 Nanometer, noch mehr bevorzugt von unter 5 Nanometer nanoskopisch dünn ausgebildet wird.

7. Beschichtungssystem zur Beschichtung von Oberflächen, insbesondere von Gebäudewänden, mit einem ersten Beschichtungsmaterial zur Ausbildung einer ersten Schicht (3) und einem zweiten Beschichtungsmaterial zur Ausbildung einer zweiten Schicht (4) über der ersten Schicht (3), wobei das zweite Beschichtungsmaterial ein fluidförmiges Trägermaterial mit darin dispergierten Nanopartikeln (5) ist.

8. Beschichtungssystem nach Anspruch 7, **dadurch gekennzeichnet, daß** das Trägermaterial eine auf Basis von Acrylharz gebildete Lösung ist.

9. Beschichtungssystem nach Anspruch 7 oder 8, **dadurch gekennzeichnet, daß** die Nanopartikel nanoskalische Oxyde der Elemente der Gruppe bestehend aus Aluminium, Titan, Zirkonium, Tantal und Zinn sind.

10. Beschichtungssystem nach einem der vorhergehenden Ansprüche 7 bis 9, **dadurch gekennzeichnet, daß** die Nanopartikel (5) auf Siliziumbasis hergestellten Nanostrukturen sind.
